# FASCICULE DE BREVET EUROPEEN

(11) **EP 3 661 655 B1**
(45) Date de publication et mention de la délivrance du brevet: **13.12.2023**
(21) Numéro de dépôt: 18755525.5
(22) Date de dépôt: 26.07.2018
(51) Int. Cl.: B05B 7/02, B05B 7/08, B05B 1/20, D04H 1/655, D04H 1/4226, D04H 1/64, C03C 25/146, B05B 7/14

(54) **INSTALLATION DE FABRICATION DE LAINE MINÉRALE ET DISPOSITIF DE PROJECTION D'UNE COMPOSITION D'ENCOLLAGE ÉQUIPANT UNE TELLE INSTALLATION**
ANLAGE ZUR HERSTELLUNG VON MINERALWOLLE UND VORRICHTUNG ZUM SPRITZEN EINES BINDERS IN EINER SOLCHEN ANLAGE
PLANT FOR MANUFACTURING MINERAL WOOL AND DEVICE FOR SPLATTERING A BINDER COMPOSITION IN SUCH A PLANT

(30) Priorité: 31.07.2017 FR 1770811
(43) Date de publication de la demande: 10.06.2020
(73) Titulaire: SAINT-GOBAIN ISOVER, 92400 Courbevoie (FR)
(72) Inventeur: D'HERIN BYTNER, Frédéric, 75009 Paris (FR); COLIN, Sébastien, 65000 Tarbes (FR); LERICQUE, Bernard, 60290 Monchy Saint Eloi (FR)
(74) Mandataire: Ex Materia
(86) Numéro de dépôt international: PCT/FR2018/051927
(87) Numéro de publication internationale: WO 2019/025706

(56) Documents cités:
- FR-A1- 2 878 864
- US-A- 3 901 675
- US-A1- 2008 156 041
- US-A1- 2012 144 868

## Description

L'invention a trait au domaine de la fabrication de laine minérale, du type par exemple laine de verre, et elle concerne plus particulièrement les opérations et les systèmes correspondants de projection de liant entre et ou sur les fibres.

Des installations de fabrication de laine minérale comportent classiquement plusieurs postes successifs parmi lesquels un poste de fibrage, dans lequel on crée la fibre de verre, un poste d'encollage, dans lequel on lie les fibres entre elles par ajout d'une composition d'encollage, et un poste de réticulation dans lequel on transforme par chauffage le matelas de fibres encollées entre elles obtenu précédemment pour former la laine minérale.

De manière plus détaillée, du verre fondu est déposé dans une assiette rotative qui forme dans le poste de fibrage un dispositif de centrifugation, à l'extérieur duquel s'échappent des fibres de verres qui tombent en direction d'un convoyeur, sous l'effet d'un flux d'air descendant. Sur le passage des fibres tombant vers ce convoyeur, on pulvérise la composition d'encollage participant à former le liant sur le passage des fibres. Afin d'éviter l'évaporation de la composition d'encollage, on peut réaliser une opération de refroidissement des fibres à encoller, par la projection d'un liquide de refroidissement et notamment de l'eau en aval de l'opération d'encollage. Les fibres encollées une fois refroidies tombent sur le convoyeur et le matelas ainsi formé est ensuite dirigé en direction d'une étuve formant le poste de réticulation, dans laquelle le matelas est simultanément asséché et soumis à un traitement thermique spécifique qui provoque la polymérisation (ou « durcissement ») de la résine du liant présent à la surface des fibres.

Le matelas continu de laine minérale est ensuite destiné à être découpé pour former par exemple des panneaux ou rouleaux d'isolation thermique et/ou acoustique.

La projection de liant est maîtrisée au moment du passage des fibres à encoller. On connaît de l'art antérieur, et notamment du document EP1807259, un dispositif de projection de liant comportant deux couronnes annulaires porteuses de buses de pulvérisation et à l'intérieur desquelles passent successivement les fibres de verres. Une couronne est reliée à un réservoir de liant et chaque buse de pulvérisation associée à cette première couronne est configurée pour recevoir d'une part une quantité de ce liant et d'autre part une quantité d'air comprimé via une alimentation indépendante pour projeter du liant au passage des fibres de verres, et l'autre couronne est reliée à un réservoir de fluide de refroidissement et chaque buse de pulvérisation associée à cette deuxième couronne est configurée pour projeter ce fluide de refroidissement au passage des fibres de verre. Une autre installation de fabrication de laine minérale est par exemple divulguée dans US 2012/144868 A1.

Il est connu d'utiliser des liants à base de composés phénoliques, pour lesquels aussi bien la pulvérisation du liant, le mélange du liant avec les fibres que le passage en étuve de ces fibres encollées sont facilement maîtrisés par les industriels. On comprend que ces liants traditionnellement utilisés peuvent poser un problème de par la libération possible de substances toxiques sous forme de composés organiques volatiles.

La présente invention s'inscrit dans ce contexte et vise à proposer un dispositif annulaire de projection d'une composition d'encollage sur des fibres minérales, par exemple des fibres de verre, comportant au moins un circuit de distribution de ladite composition d'encollage et au moins une buse de pulvérisation communiquant fluidiquement avec le circuit de distribution et agencée sur le pourtour du dispositif annulaire de projection pour projeter la composition d'encollage sur les fibres destinées à passer à l'intérieur du dispositif annulaire de projection défini par un axe de révolution. Selon l'invention, la composition d'encollage est un liant à base de produits biosourcés et au moins une buse de pulvérisation comporte une tête de pulvérisation présentant une fente, par laquelle le liant à base de produits biosourcés sort du dispositif annulaire de projection, à section rectangulaire de manière à former un jet plat de liant à base de produits biosourcés.

Une telle solution permet l'utilisation, en tant que composition d'encollage de fibres minérales, de liant sans composants phénoliques, et donc plus écologique, à base de produits biosourcés, pour former un « liant vert », également connu sous la dénomination de « Green Binder ».

Si l'utilisation d'un liant vert est moins problématique que celle d'un liant de type phénolique d'un point de vue écologique, les inventeurs ont constaté que la pulvérisation était rendue plus compliquée car les composants de ce liant vert génèrent un liant plus visqueux que le liant de type phénolique. Pour cela, il est nécessaire d'ajouter de l'eau au liant vert avant sa projection sur le tore de fibres. Cet apport supplémentaire d'eau peut poser un problème d'évaporation dans les postes faisant suite au poste d'encollage et selon l'invention, de façon complémentaire à l'utilisation d'un liant vert, l'utilisation d'une buse de pulvérisation permettant la formation d'un jet plat permet une bonne distribution du liant sur le pourtour du tore de fibres passant dans le poste d'encollage et d'éviter ainsi une concentration d'eau sur certaines zones de ce tore de fibres afin de faciliter l'évaporation de cette eau amenée en surabondance pour l'utilisation de « liant vert ».

Par ailleurs, une telle solution permet de concentrer le jet de composition d'encollage pour contrôler leur orientation et éviter que les jets pulvérisés par les buses se croisent. Les inventeurs ont en effet découvert qu'il était bénéfique de ne pas laisser se faire croiser les jets pulvérisés par ces buses, une telle interférence pouvant générer une modification du calibre des gouttes formées par coalescence.

Selon différentes caractéristiques de l'invention, prises seules ou en combinaison, on pourra prévoir que :
- l'au moins une buse de pulvérisation est orientée vers l'intérieur du dispositif annulaire de projection avec un angle d'inclinaison déterminé par rapport à un plan de révolution du dispositif annulaire de projection, ledit angle d'inclinaison étant compris entre 0 et 80° ; de préférence, cet angle d'inclinaison est compris entre 5° et 80° ; une inclinaison minimale de 5° est intéressante en ce qu'elle évite un rebond des gouttes de liant sur le tore de fibres passant dans le dispositif annulaire de projection, rebond qui pourrait pénaliser la projection ultérieure de liant ; plus particulièrement, l'angle d'inclinaison peut être compris entre 5° et 70°, une inclinaison maximale de 70° étant intéressante en ce qu'elle évite de pulvériser le liant le long du tore de fibres en direction du convoyeur situé sous le dispositif annulaire de projection et en ce qu'elle permet la pénétration du liant dans le tore de fibres, alors que ces fibres défilent à grande vitesse devant le dispositif annulaire de projection ; avantageusement, l'angle d'inclinaison est compris entre 5° et 60° ;
- au moins deux buses de pulvérisation consécutivement agencées sur le pourtour du dispositif annulaire de projection présentent une forme identique, ne se distinguant l'une de l'autre que par l'inclinaison de leur canal de sortie ; on comprend dès lors que selon l'invention des buses de pulvérisation successives se distinguent essentiellement par leur orientation différente par rapport au plan de révolution du dispositif annulaire de projection, la forme identique ou distincte, aussi bien dans leur enveloppe extérieure que dans le type de jet qu'elle réalise par exemple, étant une caractéristique de différenciation secondaire ;
- chaque buse de pulvérisation étant orientée vers l'intérieur du dispositif annulaire de projection avec un angle d'inclinaison déterminé par rapport à un plan de révolution du dispositif annulaire de projection, au moins deux buses de pulvérisation consécutivement agencées sur le pourtour du dispositif annulaire de projection sont disposées de manière à présenter une orientation par rapport au plan de révolution du dispositif annulaire de projection d'un angle d'inclinaison différent l'une de l'autre ;
- chaque buse comporte un corps de fixation rendu solidaire d'un tube annulaire délimitant l'au moins un circuit de distribution, et au moins deux buses de pulvérisation consécutivement agencées sur le pourtour du dispositif annulaire de projection ayant des corps disposés à un même niveau axial relativement à l'axe de révolution du dispositif annulaire de projection ;

- le dispositif annulaire de projection comporte une pluralité de buses de pulvérisation réparties sur le pourtour du dispositif annulaire de projection, chacune des buses de pulvérisation comportant une tête de pulvérisation avec une fente à section rectangulaire ;
- la fente à section rectangulaire s'étend principalement selon une direction parallèle au plan de révolution du dispositif ; en d'autres termes, la fente à section rectangulaire de l'au moins une buse de pulvérisation est agencée de sorte que le grand côté du rectangle formant cette fente à section rectangulaire s'étend parallèlement à un plan de révolution du dispositif annulaire de projection ;
- la fente à section rectangulaire de l'au moins une buse de pulvérisation est dimensionnée de sorte que le jet plat de liant à base de produits biosourcés correspondant présente une première ouverture angulaire comprise entre 40° et 120°, selon une première direction correspondant au grand côté de ladite fente ; de façon préférée, la première ouverture angulaire est comprise entre 50° et 70° ;
- la fente à section rectangulaire de l'au moins une buse de pulvérisation est dimensionnée de sorte que le jet plat de liant à base de produits biosourcés correspondant présente une deuxième ouverture angulaire comprise entre 5° et 40°, selon une deuxième direction correspondant au petit côté de ladite fente ; de façon préférée, la deuxième ouverture angulaire est comprise entre 10° et 30°, et elle peut être avantageusement comprise entre 15° et 25° ;
- la fente à section rectangulaire de l'au moins une buse de pulvérisation est dimensionnée de sorte que la première ouverture angulaire est au moins égale au double de la deuxième ouverture angulaire ; de façon préférée, la valeur de la première ouverture angulaire est sensiblement égale au triple de la valeur de la deuxième ouverture angulaire ; à titre d'exemple, la deuxième ouverture angulaire peut être comprise entre 16° et 17°, et la première ouverture angulaire peut être comprise entre 50° et 60° ;
- le dispositif annulaire de projection comporte une pluralité de buses de pulvérisation et chaque buse est voisine de buses dont l'orientation par rapport au plan de révolution du dispositif angulaire de projection est différente de la sienne ;
- les buses sont réparties en au moins deux ensembles, entre un premier ensemble dans lequel chaque buse est configurée de sorte que l'orientation par rapport au plan de révolution du dispositif annulaire de projection prend un premier angle d'inclinaison et un deuxième ensemble dans lequel chaque buse est configurée de sorte que l'orientation par rapport au plan de révolution du dispositif annulaire de projection prend un deuxième angle d'inclinaison distinct du premier angle, les buses de pulvérisation étant agencées sur le pourtour du dispositif annulaire de projection avec une alternance de buses du premier ensemble et de buses du deuxième ensemble ; cet agencement participe au fait d'éviter que les jets pulvérisés par les buses se croisent et d'éviter une modification du calibre des gouttes formées par coalescence ; ainsi, il est possible selon l'invention de disposer des buses proches l'une de l'autre, pour assurer un recouvrement du tore de fibres supérieur à 100% et s'assurer que le tore de fibres soit correctement encollé même en cas de défaillance d'une buse, tout en évitant le risque si elles fonctionnent toutes simultanément que les jets pulvérisés par ces buses ne soient pas à la forme souhaitée ; on vise ainsi une homogénéité de la distribution de composition d'une composition d'encollage sur un tore de fibres de verre, puisqu'on peut projeter cette composition d'encollage sur tout le pourtour du tore et avec une forme maîtrisée des gouttes qui ne varient pas selon la zone de pulvérisation.
- les buses du premier ensemble sont configurées de sorte qu'elles sont orientées par rapport au plan de révolution du dispositif annulaire de projection avec un premier angle d'inclinaison compris entre 0° et 45° ; de préférence, le premier angle d'inclinaison peut être compris entre 5° et 40° ;
- les buses du deuxième ensemble sont configurées de sorte qu'elles sont orientées par rapport au plan de révolution du dispositif annulaire de projection avec un deuxième angle d'inclinaison compris entre 25° et 80° ; de préférence, le deuxième angle d'inclinaison peut être compris entre 25° et 60° ;
- le circuit de distribution du liant à base de produits biosourcés comporte une alimentation unique et une pluralité d'orifices communiquant respectivement avec une buse de pulvérisation ;
- le dispositif annulaire de projection comporte deux circuits de distribution distincts décalés le long de l'axe de révolution du dispositif annulaire de projection, les buses de pulvérisation étant agencées entre ces deux circuits de distribution de manière à être en communication fluidique avec chacun desdits circuits de distribution ;
- un premier circuit de distribution est configuré pour recevoir le liant à base de produits biosourcés et un deuxième circuit de distribution est configuré pour recevoir de l'air comprimé ;
- le premier circuit de distribution présente une section moyenne de diamètre inférieur au diamètre de la section moyenne du deuxième circuit de distribution ;
- le dispositif annulaire de projection comporte des moyens de contrôle du débit d'air comprimé en fonction de la quantité de composition d'encollage à projeter sur les fibres.

L'invention concerne également une installation de fabrication de laine minérale, comportant des moyens de fibrage configurés pour amener des fibres à l'intérieur d'un poste d'encollage et notamment d'encollage de ces fibres, caractérisée en ce que le poste d'encollage comporte uniquement un dispositif annulaire de projection de composition d'encollage conforme à ce qui vient d'être décrit, le dispositif annulaire étant agencé de manière à présenter un plan de révolution sensiblement perpendiculaire à la direction de passage du tore de fibres à encoller.

Il convient de noter qu'une installation de ce type est particulièrement avantageuse en ce que l'on a supprimé dans le poste d'encollage, c'est-à-dire le poste en aval des moyens de fibrage par rapport au trajet des fibres, un étage de refroidissement. Les inventeurs ont pu noter que les fibres passant dans un tel poste d'encollage avec un étage de refroidissement en moins sont en sortie du poste d'encollage, c'est-à-dire vers un poste de réticulation, en parfaite condition pour cette opération de réticulation.

Dans une telle installation, le dispositif annulaire de projection peut être agencé de sorte que le premier circuit de distribution, associé à la pulvérisation de liant à base de produits biosourcés, soit disposé en aval du trajet des fibres par rapport au deuxième circuit de distribution, associé à l'air comprimé.

L'invention concerne également une méthode de fabrication de laine minérale au cours de laquelle on réalise au moins les étapes suivantes :
- on amène du verre fondu dans un poste de fibrage,
- on crée des fibres de verre dans ce poste de fibrage, de manière à ce que ces fibres de verre prennent la forme d'un faisceau de fibres dirigé vers un poste d'encollage,
- on lie dans le poste d'encollage les fibres du faisceau entre elles par ajout d'une composition d'encollage, les fibres du faisceau étant liées directement à leur entrée dans le poste d'encollage sans qu'une couronne de refroidissement soit agencée dans le poste d'encollage, par un dispositif annulaire de projection comportant au moins un circuit de distribution dudit liant et au moins une buse de pulvérisation communiquant fluidiquement avec le circuit de distribution, ladite au moins une buse de pulvérisation étant agencée sur le pourtour du dispositif annulaire de projection pour projeter ledit liant sur les fibres destinées à passer à l'intérieur du dispositif annulaire de projection défini par un axe de révolution, l'au moins une buse de pulvérisation comportant une tête de pulvérisation présentant une fente, par laquelle le liant à base de produits biosourcés sort du dispositif annulaire de projection, à section rectangulaire de manière à former un jet plat de liant à base de produits biosourcés,
- et on transforme par chauffage le matelas de fibres encollées entre elles obtenu précédemment pour former la laine minérale.

Plus particulièrement, la méthode de fabrication de laine minérale peut comprendre une étape de création de fibres de verre par un effet de centrifugation appliqué à du verre fondu, les filaments de verre formés par centrifugation étant étirés pour former un tore de fibres sous l'effet d'une projection d'un courant gazeux à grande vitesse et à température suffisamment élevée.

On peut noter que, dans la méthode de fabrication selon l'invention, la composition d'encollage est projetée sur le faisceau de fibres par la projection d'une composition d'encollage, sans que celle-ci soit associée à une étape spécifique de refroidissement en amont ou en aval de la projection de liant dans le poste d'encollage. Il est à noter que, dans la méthode de fabrication de laine minérale selon l'invention, d'une part le faisceau de fibres formé par soufflage du courant gazeux à température élevée reçoit une projection de composition d'encollage sans qu'il soit nécessaire de former un étage spécifique de refroidissement préalable, et d'autre part le faisceau de fibres encollées atteint le poste de réticulation sans qu'il soit nécessaire de former un étage spécifique de refroidissement entre le poste d'encollage et le poste de réticulation.

D'autres caractéristiques, détails et avantages de la présente invention ressortiront plus clairement à la lecture de la description détaillée donnée ci-après à titre indicatif, en relation avec les différents exemples de réalisation de l'invention illustrés sur les figures suivantes :
- la figure 1 est une représentation schématique d'une partie d'une installation de fabrication de laine minérale, illustrant notamment le poste d'encollage dans lequel une composition d'encollage est pulvérisée sur un tore de fibres ;
- la figure 2 est une vue de face du dispositif d'encollage représenté schématiquement sur la figure 1, en prise autour d'une hotte d'un poste de fibrage dans lequel on obtient les fibres à encoller ;
- la figure 3 est une vue de face d'une moitié du dispositif d'encollage de la figure 2 ;
- la figure 4 est une vue de détail d'un dispositif d'encollage selon un mode de réalisation spécifique dans lequel les buses de pulvérisation voisines sont inclinées différemment l'une de l'autre, la figure 4 illustrant plus particulièrement deux buses de pulvérisation du dispositif d'encollage afin de rendre visible leur orientation différente et la forme plate du jet de liant tel que pulvérisé par ces buses ;
- la figure 4b est une représentation schématique de face d'une des buses de pulvérisation de la figure 4, rendant notamment visible la forme de la fente à section rectangulaire par laquelle le liant sort du dispositif d'encollage ;
- les figures 5 et 6 sont des vues en coupe d'une buse de pulvérisation selon les plans de coupe V-V et VI-VI représentés sur la figure 4 ;
- et la figure 7 est une vue en coupe partielle d'un exemple de réalisation de buse de pulvérisation et des circuits de distribution sur lesquels elle est rapportée.

L'invention porte sur la mise en oeuvre de buses de pulvérisation spécifiques pour la pulvérisation d'une composition d'encollage, ou liant, particulière sur un tore de fibres de verre, et plus particulièrement elle porte sur l'utilisation d'un liant vert, ou liant à base de produits biosourcés, et sur la pulvérisation de ce liant par l'intermédiaire de buses spécifiques en ce qu'elles permettent un jet plat de ce liant vert. Tel que cela sera décrit ci-après, le liant vert, qui nécessite un apport d'eau conséquent, est de la sorte pulvérisée en évitant l'agglomération de ce liant sur certaines zones du tore de fibres et en évitant ainsi d'éventuels problèmes d'évaporation de l'eau contenu dans le liant dans les opérations suivant cette pulvérisation.

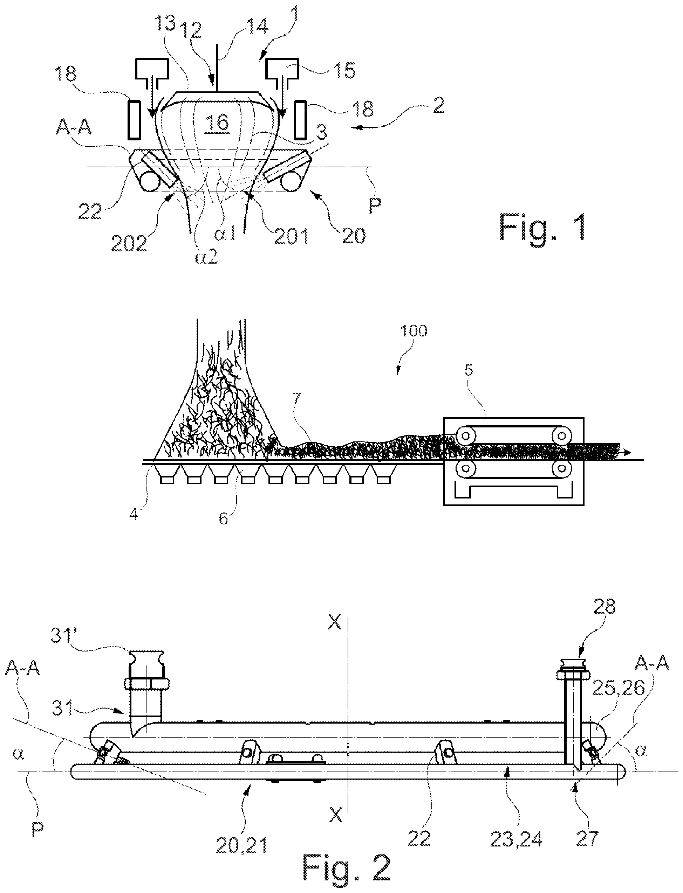

On a illustré sur la figure 1 une partie d'une installation de fabrication 100 de laine minérale, et plus particulièrement de laine de verre, et plus particulièrement différents postes successifs participant à la création d'un matelas isolant composé de fibres de verres encollées composant un matériau isolant de type laine minérale, par exemple laine de verre. Un premier poste, dit poste de fibrage 1, consiste en l'obtention de fibres par l'intermédiaire d'une assiette de centrifugation, en aval de laquelle se trouve un deuxième poste, dit poste d'encollage 2, dans lequel on réalise principalement l'encollage des fibres 3 préalablement obtenues par un liant, ici un « liant vert », pour les lier entre elles.

Les fibres encollées se posent dans un poste de formage sur un tapis de convoyage 4, qui les emmène vers une étuve formant un poste de réticulation 5 et à l'intérieur de laquelle elles sont chauffées pour réticuler le « liant vert ».

Le tapis de convoyage 4 est perméable aux gaz et à l'eau, et il s'étend au-dessus de caissons d'aspiration 6 des gaz tels que l'air, les fumées et les compositions aqueuses excédentaires issues du processus de fibrage précédemment décrit. Il se forme ainsi sur le tapis de convoyage 4 un matelas 7 de fibres de laine de verre mélangées intimement avec la composition d'encollage. Le matelas 7 est conduit par le tapis de convoyage 4 jusqu'à l'étuve formant le poste de réticulation 5 du « liant vert ».

On comprend qu'une telle ligne d'installation est adaptée pour la production de produits à base de fibres de laine de verre, tel que cela va être décrit, mais qu'elle est évidemment adaptée à la production de produits à base de fibres minérales.

Le poste de fibrage 1 est ici configuré pour la mise en oeuvre d'un procédé de fibrage par centrifugation interne. On comprendra que tout type de centrifugation et de centrifugeur associé peut être mis en oeuvre avec les enseignements qui vont suivre dès lors que des fibres sont obtenues en sortie du centrifugeur pour leur passage à venir dans le poste d'encollage.

A titre d'exemple illustré sur la figure 1, le verre fondu peut être amené en un filet 14 depuis un four de fusion et d'abord récupéré dans un centrifugeur 12, pour ensuite s'échapper sous la forme d'une multitude de filaments entraînés en rotation. Le centrifugeur 12 est par ailleurs entouré par un brûleur annulaire 15 qui crée à la périphérie de la paroi du centrifugeur un courant gazeux à grande vitesse et à température suffisamment élevée pour étirer les filaments de verre en fibres sous la forme d'un tore 16.

On comprend que l'exemple de poste de fibrage donné ci-dessus est indicatif et non limitatif de l'invention, et que l'on pourra prévoir aussi bien un procédé de fibrage par centrifugation interne avec un panier et une paroi de fond trouée, ou avec une assiette avec un fond plein, dès lors que le verre fondu s'étire par centrifugation pour s'étendre par la suite sous forme de tore de fibres 16 dans le poste d'encollage.

Par ailleurs, on pourra prévoir d'autres variantes non limitatives de l'invention pour ce poste de fibrage, et notamment des moyens alternatifs ou cumulatifs par rapport au brûleur annulaire, et par exemple des moyens de chauffage 18, par exemple du type inducteur, servant à maintenir le verre et le centrifugeur à la bonne température.

Le tore de fibres 16 ainsi créé est entouré par un dispositif annulaire de projection d'une composition d'encollage formée par un « liant vert », le dispositif annulaire de projection étant dénommé par la suite dispositif d'encollage 20, dont seules deux buses de pulvérisation 22 sont représentées sur la figure 1.

On va maintenant décrire plus en détails le dispositif annulaire de projection, ou dispositif d'encollage 20, agencé dans le poste d'encollage 2, notamment en se référant aux figures 2 à 7.

Le dispositif d'encollage 20 comporte une couronne annulaire 21, présentant une forme générale de révolution autour d'un axe de révolution X-X. La couronne 21 comporte deux circuits de distribution distincts décalés d'une distance d le long de l'axe de révolution X-X et une pluralité de buses de pulvérisation 22 agencées entre ces deux circuits de distribution et configurées pour assurer une communication fluidique avec les circuits de distribution. On saura décrire par la suite des variantes relatives au nombre de circuits de distribution de la couronne et/ou à la circulation de fluide dans ces circuits distribution.

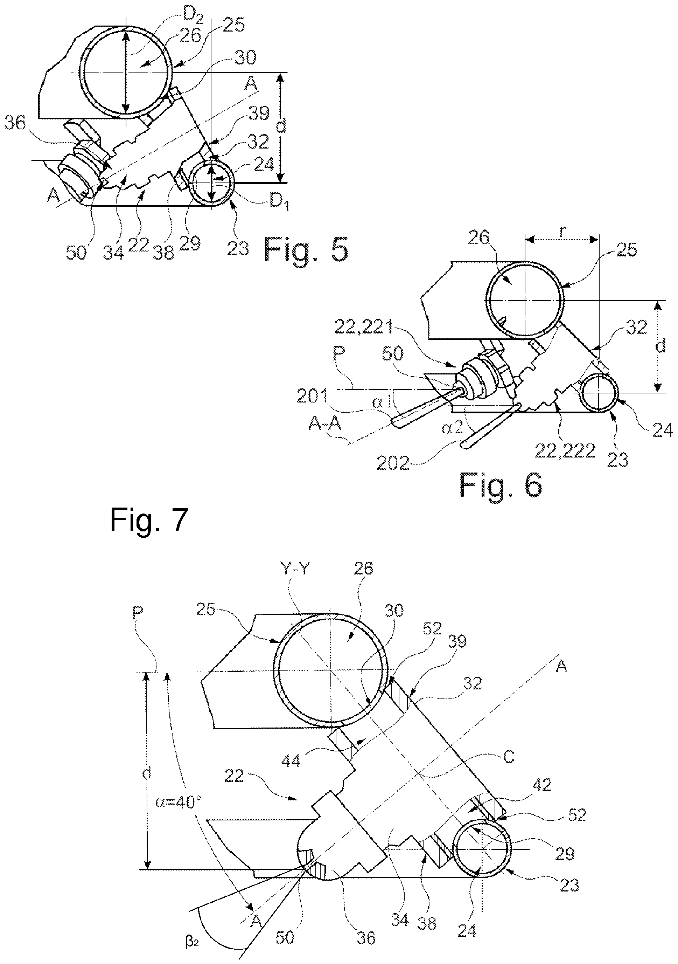

Dans l'exemple illustré, la couronne annulaire comporte notamment un premier tube annulaire 23 à l'intérieur duquel un premier conduit de distribution 24 (visible sur les figures 5 à 7 notamment) est ménagé pour permettre une circulation d'une composition d'encollage, ainsi qu'un deuxième tube annulaire 25, qui s'étend selon un plan de révolution, perpendiculaire à l'axe de révolution X-X de la couronne annulaire 21, et parallèle au plan de révolution du premier tube annulaire 23. On définit pour la suite un plan de révolution P du dispositif annulaire de projection comme étant l'un ou l'autre des plans de révolution tels qu'ils viennent d'être décrits, ou à tout le moins un plan parallèle à ceux-ci.

A l'intérieur de ce deuxième tube annulaire 25, un deuxième conduit de distribution 26 (également visible sur les figures 5 à 7) est ménagé pour permettre une circulation d'air comprimé, susceptible de projeter la composition d'encollage sur les fibres passant à travers le dispositif d'encollage 20.

Le premier tube annulaire 23 présente une forme tubulaire dont la paroi interne, délimitant le premier conduit de distribution 24, présente une section constante, ou sensiblement constante sur tout le pourtour du tube. Par section sensiblement constante, on entend une section qui reste la même avec une marge d'écartement inférieur à 5%. A titre d'exemple indicatif, la section moyenne du premier tube annulaire peut avoir un diamètre D1 compris entre 10mm et 30mm.

Le premier tube annulaire 23 comporte une unique zone d'alimentation 27 dans laquelle est rapporté un tuyau d'alimentation 28 d'une composition d'encollage, relié à son autre extrémité à un réservoir de cette composition d'encollage ici non représenté et dans lequel est réalisé un mélange d'eau et de colle.

La composition d'encollage consiste ici en un liant à faible teneur en formaldéhyde, de préférence même sans formaldéhyde, que l'on qualifiera par la suite de liant à base de produits biosourcés, ou « liant vert ». Ce type de liant est au moins partiellement issu d'une base de matière première renouvelable, en particulier végétale, notamment du type à base de sucres hydrogénés ou non. On pourra trouver à la fin de la description des éléments complémentaires relatifs à des réalisations de ce « liant vert », étant noté que la viscosité de ces produits biosourcés implique l'utilisation d'eau en grande quantité pour diluer l'ensemble et former un liant susceptible d'être projeté par les buses.

Le tuyau d'alimentation 28, par lequel « le liant vert », ou bien liant à base de produits biosourcés, est amené dans le dispositif annulaire de projection, est agencé parallèlement à l'axe de révolution de la couronne annulaire de distribution, mais on comprend que l'on pourrait agencer différemment cette alimentation sans sortir du contexte de l'invention. Il convient toutefois de noter que selon une caractéristique de l'invention, le « liant vert » est injecté dans le premier conduit de distribution du premier tube annulaire via une zone d'alimentation unique, le « liant vert » étant destiné par ailleurs à circuler sur tout le pourtour du premier conduit de distribution.

Le premier tube annulaire 23 délimitant le premier conduit de distribution 24 comporte également une pluralité d'orifices de sortie 29 (visibles sur les figures 5 à 7 notamment), régulièrement répartis sur tout le pourtour du premier tube annulaire. Tel que cela sera décrit plus en détails ci-après, chacun de ces orifices de sortie débouche sur une buse de pulvérisation 22 agencée pour être en communication fluidique avec le premier conduit de distribution 24 via l'orifice de sortie correspondant.

Il résulte de ce qui précède que le premier tube annulaire 23 est consacré à la distribution du « liant vert » en direction des buses de pulvérisation 22.

Par ailleurs, le deuxième tube annulaire 25 présente une forme tubulaire dont la paroi interne, délimitant le deuxième conduit de distribution 26, présente une section constante, ou sensiblement constante sur tout le pourtour du tube. Par section sensiblement constante, on entend une section qui reste la même avec une marge d'écartement inférieur à 5%. A titre d'exemple indicatif, la section moyenne du deuxième tube annulaire peut avoir un diamètre D2 compris entre 30mm et 50mm.

Conformément au premier tube annulaire, le deuxième tube annulaire 25 comporte une unique zone d'alimentation 31 dans laquelle est rapporté un raccord d'alimentation 31' pour une arrivée d'air comprimé.

Le raccord d'alimentation 31' en air comprimé est agencé parallèlement à l'axe de révolution de la couronne annulaire de distribution et parallèlement au tuyau d'alimentation 28 de « liant vert », mais on comprend que l'on pourrait agencer différemment cette alimentation en air comprimé sans sortir du contexte de l'invention. Il convient toutefois de noter que selon une caractéristique de l'invention, l'air comprimé est injecté dans le deuxième conduit de distribution du deuxième tube annulaire via une zone d'alimentation unique, l'air comprimé étant destinée par ailleurs à circuler sur tout le pourtour du deuxième conduit de distribution.

Le deuxième tube annulaire 25 délimitant le deuxième conduit de distribution 26 comporte également une pluralité d'orifices de sortie 30 (visibles sur les figures 5 à 7), régulièrement répartis sur tout le pourtour du deuxième tube annulaire. Conformément à ce qui a pu être décrit pour le premier tube annulaire 23, chacun de ces orifices de sortie débouche sur une buse de pulvérisation 22 agencée pour être en communication fluidique avec le deuxième conduit de distribution 26 via l'orifice de sortie correspondant, chacune des buses de pulvérisation 22 du dispositif d'encollage 20 étant en communication fluidique d'une part avec le premier conduit de distribution 24 et d'autre part avec le deuxième conduit de distribution 26.

Il résulte de ce qui précède que le deuxième tube annulaire 25 est consacré à la distribution d'air comprimé en direction des buses de pulvérisation 22.

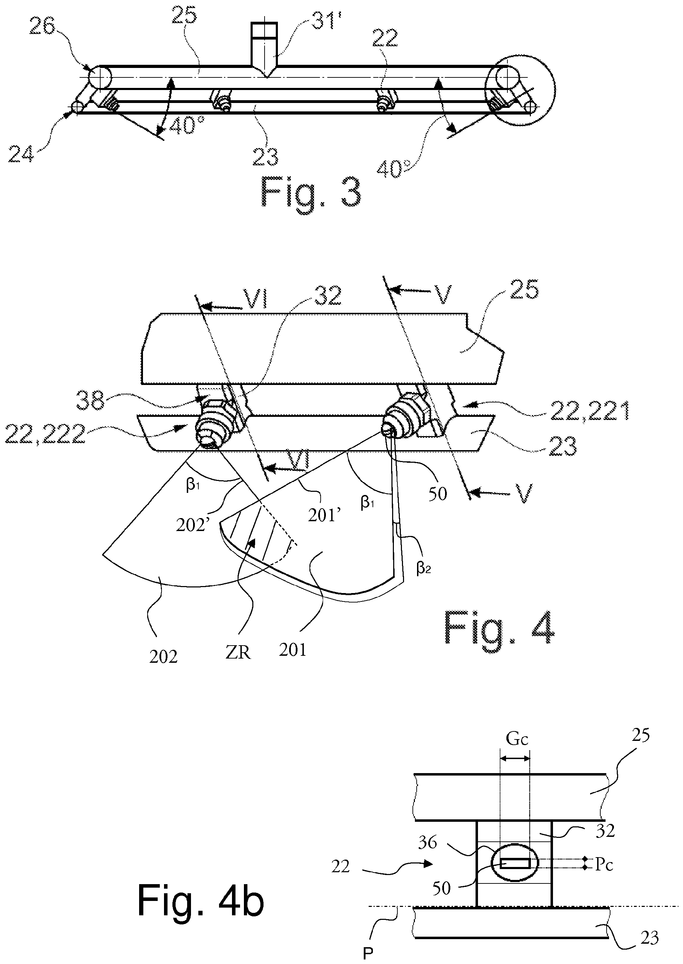

Tel que cela est visible sur les figures 2 et 3 notamment, ce deuxième tube annulaire 25, délimitant le deuxième conduit de distribution 26 dédié à la circulation d'air comprimé, est disposé au-dessus du premier tube annulaire 23, délimitant le premier conduit de distribution 24 dédié à la circulation de la composition d'encollage. Pour la bonne compréhension du terme au-dessus, on se réfère à la position du dispositif d'encollage dans l'installation. Le deuxième tube annulaire 25 disposé au-dessus du premier tube annulaire 23 est disposé au plus près de l'assiette de centrifugation duquel tombent les fibres, de sorte que ces fibres formant le tore 16 sont amenées à passer tout d'abord à travers le tube annulaire délimitant le conduit dédié à l'air comprimé.

Le diamètre de l'anneau que forme le premier tube autour de l'axe de révolution de la couronne annulaire est supérieur au diamètre correspondant du deuxième tube, de sorte que ces deux tubes annulaires sont agencés l'un au-dessus de l'autre avec un décalage radial r pour que le deuxième tube annulaire soit plus à l'intérieur que le premier tube annulaire. Il en résulte une orientation inclinée, par rapport à l'axe de révolution de la couronne annulaire, des buses de pulvérisation 22 qui sont solidaires de chacun des deux tubes annulaires. Tel que cela sera décrit ci-après, différentes variantes de réalisation peuvent être prévues dans lesquelles les buses de pulvérisation sont fixées sur les tubes annulaires de sorte que leur angle d'inclinaison par rapport à l'axe de révolution soit constant sur tout le pourtour du dispositif annulaire de projection (notamment visible sur les figures 2, 3 et 7) ou bien de sorte que cet angle d'inclinaison varie d'une buse à l'autre (notamment visible sur les 4 à 6). On comprend que ces variantes sont inscrites dans le contexte de l'invention, dès lors que les buses permettent la pulvérisation d'un liant vert par l'intermédiaire de buses spécifiques à jet plat.

Les premier et deuxième tubes annulaires sont configurés de sorte que leur paroi interne délimitant respectivement les premier et deuxième conduits de distribution présente une section moyenne différente l'une de l'autre. Notamment la paroi interne du deuxième tube définit une section moyenne de diamètre D2 supérieur au diamètre D1 de la section moyenne de la paroi interne du deuxième tube annulaire. La section de passage pour le « liant vert » est de la sorte plus petite que la section de passage pour l'air comprimé. Une telle caractéristique permet de s'assurer du fait que le premier conduit de distribution, plus étroit, est constamment rempli du liant et qu'il n'y pas de défaut d'alimentation des buses de pulvérisation. Par ailleurs, le fait de dimensionner petitement le premier conduit de distribution permet d'accélérer la vitesse de déplacement du « liant vert » dans ce premier conduit et donc de prévenir d'un éventuel encrassement du premier tube annulaire.

Il convient de noter, dans le même contexte, la distinction à apporter au premier tube annulaire et deuxième tube annulaire. Comme cela a été précisé précédemment, ces deux tubes annulaires présentent une section moyenne constante. Au moins le premier tube annulaire 23 fait l'objet d'une opération d'ébavurage chimique, afin de supprimer les arêtes au niveau du raccordement des orifices de sortie 29 et du tuyau d'alimentation sur ce premier tube annulaire 23. De la sorte, on vise là aussi à prévenir le dépôt de produits biosourcés formant partie du liant à l'intérieur du premier tube annulaire. On comprend que le caractère visqueux de ces composants présente un risque de les voir rester accrochés à toute rugosité trop marquée à l'intérieur du tube annulaire et que le contexte d'application de ces liants verts dans le dispositif annulaire de projection selon l'invention implique de tenir compte de cette rugosité de surface et du dimensionnement du tube annulaire dans lequel le liant vert est amené à circuler.

De la différence de diamètre interne des tubes annulaires, il en résulte également une différence de diamètre externe de ces tubes, de sorte qu'un plus gros tube est prévu pour l'arrivée d'air que pour l'arrivée de la composition d'encollage. Dans l'exemple illustré, le plus gros tube se retrouve au-dessus du plus petit tube et des brides de fixation, ici non représentées, pour la fixation de la couronne dans le poste d'encollage peuvent être rapportées notamment sur le plus gros tube. On comprend que les tubes pourraient être agencés différemment l'un par rapport au l'autre sans que cela sorte du contexte de l'invention, avec notamment le tube d'arrivée d'air qui pourrait être situé en dessous du plus petit tube prévu pour la composition d'encollage.

Tel qu'illustré sur les figures 2 à 7 notamment, les tubes annulaires 23, 25 formant la conduite annulaire 21 sont agencés l'un au-dessus de l'autre de telle sorte que les premiers orifices de sortie du premier conduit de distribution et les deuxièmes orifices de sortie du deuxième conduit de distribution se superposent axialement, c'est-à-dire qu'ils sont répartis angulairement de la même façon autour de l'axe de révolution correspondant du conduit.

De la sorte, la buse de pulvérisation 22 qui met en communication fluidique un premier orifice de sortie du premier conduit de distribution avec un deuxième orifice de sortie du deuxième conduit de distribution, s'étend axialement, c'est-à-dire dans un plan comprenant l'axe de révolution X-X de la couronne annulaire.

Tel que notamment illustré sur les figures 5 à 7, la buse de pulvérisation 22 comporte un corps 32 qui s'étend entre les deux tubes annulaires, une buse liquide 34 qui s'étend en travers de ce corps 32 selon un axe d'orientation A-A et à l'extrémité libre de laquelle est disposé une tête de pulvérisation, ou cap à air, 36 configurée pour permettre la nébulisation du liant à base de produits biosourcés, ou « liant vert », selon un jet plat.

Le corps 32 présente une forme cylindrique, ici de section rectangulaire, comportant deux canaux internes de sorte que le corps peut recevoir d'une part le « liant vert » provenant du premier conduit de distribution 24 via un premier orifice de sortie 29, et d'autre part l'air comprimé provenant du deuxième conduit de distribution 26 via un deuxième orifice de sortie 30. Le corps 32 est ainsi défini par un axe d'allongement Y-Y qui s'étend d'un tube annulaire à l'autre. Dans la configuration illustrée sur la figure 7, la buse de pulvérisation 22 est configurée de sorte que l'axe d'allongement Y-Y est confondu avec une droite passant par le centre de chacun des tubes annulaires et il en résulte un angle α entre l'axe d'orientation A-A de la buse liquide 34 et le plan de révolution P du dispositif annulaire de projection égal ici à 40°. Tel qu'illustré sur les figures 2 et 3, l'ensemble des buses de pulvérisation 22 est agencé de manière à présenter un tel angle d'inclinaison, d'une valeur égale à 40°. De manière générale, les buses de pulvérisation peuvent présenter un angle d'inclinaison commun, compris entre 0 et 80°.

Le corps 32 de chaque buse de pulvérisation 22 est soudé sur les tubes annulaires, une fois que ses extrémités sont mises en regard des orifices de sortie ménagés dans chacun des tubes.

Une première face 38 du corps 32 est orientée vers l'intérieur de la couronne annulaire et son axe de révolution X-X et une deuxième face 39 est orientée à l'opposée. Le corps comporte en son centre, transversalement à l'axe d'allongement Y-Y du corps, un fourreau de réception de la buse liquide 34 débouchant à chaque extrémité sur l'une des première et deuxième faces du corps 32. Le fourreau s'étend sensiblement au centre du corps, c'est-à-dire à équidistance du premier tube annulaire 23 et du deuxième tube annulaire 25. Le fourreau est percé de manière à communiquer avec un premier canal interne 42, communiquant avec le premier orifice de sortie 29 et s'étendant parallèlement à l'axe d'allongement Y-Y du corps 32. Ces canaux internes sont configurés pour amener séparément l'air comprimé et la composition d'encollage à proximité de la tête de pulvérisation 36.

La tête de pulvérisation 36 présente une forme bombée définissant une chambre de mélange en sortie de la buse liquide 34, dans laquelle l'air comprimé et la composition d'encollage se mélangent pour former les gouttes amenées à être projetées via une fente de pulvérisation 50 ménagée dans la tête de pulvérisation.

On comprend que la buse de pulvérisation 22 est configurée pour permettre une communication fluidique entre le premier conduit de distribution 24 du tube annulaire 23 et/ou le deuxième conduit de distribution 26 du tube annulaire 25, et que la fente de pulvérisation 50, par laquelle le liant à base de produits biosourcés sort du dispositif annulaire de projection, est configurée pour la projection d'un spray d'encollage sur le tore de fibres et la dispersion de ce spray sur une plage angulaire déterminé.

La fente de pulvérisation 50 est centrée sur l'axe d'orientation A-A de la buse de pulvérisation, c'est-à-dire sur l'axe de la tige creuse 46 définissant la conduite de circulation de la composition d'encollage à l'intérieur du corps du nébuliseur, et on comprend que l'axe d'orientation A-A de la buse de pulvérisation définit la direction principale de projection selon laquelle la composition d'encollage va être projetée en sortie de la buse de pulvérisation.

Tel que cela est visible sur la figure 5 notamment, la fente de pulvérisation 50 présente une section rectangulaire, formant une buse à jet plat, de sorte que dans la direction principale de projection, le « liant vert » est projeté selon un angle d'ouverture déterminé par la longueur de la section rectangulaire.

La tête de pulvérisation 36 est orientée de sorte que la longueur de la fente de pulvérisation 50, c'est-à-dire le grand côté Gc du rectangle formant cette fente, tel que cela est notamment visible sur la figure 4b, est perpendiculaire au plan passant par l'axe de révolution X-X de la couronne annulaire et par l'axe d'orientation A-A de la buse de pulvérisation, et parallèle au plan de révolution P du dispositif annulaire de projection et donc de chaque tube annulaire de ce dispositif.

La pulvérisation de liant à base de produits biosourcés est selon l'invention cadrée par la forme de la fente de pulvérisation d'au moins une des buses de pulvérisation, à savoir une fente de section rectangulaire dimensionnée de sorte que le jet de liant à base de produits biosourcés correspondant présente une première ouverture angulaire β₁ comprise entre 40° et 120°, selon une première direction correspondant au grand côté Gc de ladite fente 50, et une deuxième ouverture angulaire β₂ comprise entre 5° et 40°, selon une deuxième direction correspondant au petit côté Pc de ladite fente 50. Il en résulte un jet plat, c'est-à-dire un jet qui s'étend selon une direction principale, ici la première direction. On comprend que les valeurs choisies pour les ouvertures angulaires doivent respecter cette forme de jet plat et que, si la deuxième ouverture angulaire est égale ou au voisinage de 40°, la première ouverture angulaire sera au moins égale à 80°. En d'autres termes, la valeur de la première ouverture angulaire β₁ est égale à au moins le double de la valeur de la deuxième ouverture angulaire β₂ et elle correspond avantageusement à un peu plus du triple de cette valeur de deuxième ouverture angulaire. A titre d'exemple numérique, on pourra prévoir une deuxième ouverture angulaire β₂ avec une valeur aux alentours de 16° ou 17° et une première ouverture angulaire avec une valeur aux alentours de 51° à 60°.

Il est avantageux que la première direction soit parallèle au plan de révolution P du dispositif annulaire de projection, c'est-à-dire le plan dans lequel s'inscrit chacun des tubes annulaires du dispositif, et donc que cette première direction soit perpendiculaire à la direction de déplacement des fibres à travers le dispositif annulaire de projection 20. Ainsi, on s'assure une pulvérisation sur une portion angulaire importante du tore de fibres, et le recouvrement par le liant de l'ensemble des fibres passant à travers le dispositif annulaire de projection est obtenu avec un nombre réduit de buses de pulvérisation.

Le fonctionnement du dispositif d'encollage équipé d'au moins une buse de pulvérisation telle qu'elle vient d'être décrit est le suivant. Des moyens de contrôle appropriés permettent de piloter l'arrivée du « liant vert » à l'intérieur du premier conduit de distribution via le tuyau d'alimentation 28. Le « liant vert » est poussé pour circuler sur tout le pourtour du tube annulaire délimitant ce premier conduit de distribution, et pour circuler vers chacun des premiers orifices 29 communiquant avec la buse de pulvérisation 22. Le « liant vert » pénétrant dans la buse de pulvérisation 22 passe à l'intérieur de la buse liquide 34 via le fourreau 40 et est poussée vers la tête de pulvérisation 36 et la chambre de mélange.

Simultanément, des moyens de contrôle appropriés permettent de piloter l'arrivée d'air comprimé, à un débit et à une pression souhaités, à l'intérieur du deuxième conduit de distribution via le raccord d'alimentation 31'. Le débit et la pression de l'air sont notamment déterminés en fonction du dosage de la composition d'encollage. L'air comprimé est poussé pour circuler sur tout le pourtour du tube annulaire délimitant ce deuxième conduit de distribution, et pour circuler vers chacun des deuxièmes orifices communiquant avec la buse de pulvérisation 22. L'air comprimé pénétrant dans la buse de pulvérisation 22 est poussé dans les conduites de circulation 48 en périphérie de la buse liquide 34 vers la tête de pulvérisation 36 et la chambre de mélange, dans laquelle le mélange de l'air comprimé et du « liant vert » participe à la nébulisation du liant, le contrôle du débit d'air en fonction de la quantité de liant projeté permettant notamment de jouer sur la taille des gouttes.

Tel que cela est illustré sur les figures 2 à 6 notamment, le dispositif d'encollage selon l'invention comporte une pluralité de buses de pulvérisation, agencées sur le pourtour de la couronne annulaire. Ces buses sont réparties angulairement régulièrement sur tout le pourtour de la couronne. On comprend que selon les modes de réalisation de l'invention, le nombre de buses, et donc l'écartement angulaire entre deux buses voisines, peut varier d'un dispositif d'encollage à l'autre. Sur la figure 2, le dispositif d'encollage comporte une série de seize buses de pulvérisation, de sorte que l'écartement angulaire entre deux buses successives de la série est de 22,5°.

Ces buses sont agencées à un même niveau axial, c'est-à-dire chacune agencée entre le premier tube annulaire et le deuxième tube annulaire, de sorte que le corps de chaque buse est centré sur un même plan perpendiculaire à l'axe de révolution de la couronne annulaire. En d'autres termes, on peut dire que les buses de pulvérisation sont configurées de sorte que leur corps, c'est-à-dire leur jonction avec chacun des tubes annulaires, s'étendent à la même hauteur.

On va maintenant décrire une variante d'agencement des buses de pulvérisation selon l'invention, qui diffère notamment de ce qui a été décrit en référence aux figures 2 et 3 par l'inclinaison variable d'au moins deux de ces buses sur le pourtour de la couronne annulaire.

Sur les figures 4, 5 et 6, , on a illustré un exemple de réalisation dans lequel toutes les buses de pulvérisation sont de conception identique, de sorte que les buses ne diffèrent que par l'inclinaison de leur axe d'orientation A-A. On comprendra que sans sortir du contexte de l'invention, les buses de pulvérisation pourraient différer dans leur conception, dès lors qu'au moins deux buses de pulvérisation s'étendant à la même hauteur présentent des inclinaisons différentes de l'une à l'autre.

Selon l'invention, au moins deux buses de pulvérisation consécutivement agencées sur le pourtour de la couronne, c'est-à-dire deux buses de pulvérisation voisines telles qu'illustrées sur la figure 4, sont disposées de manière à ce que l'axe d'orientation A-A, et donc son canal de sortie, de l'une de ces deux buses présente un angle par rapport au plan de révolution de la couronne différent de celui présenté par l'autre des deux buses.

Dans l'exemple illustré, on distingue au moins deux ensembles de buses de pulvérisation, qui se distinguent par leur inclinaison par rapport au plan de révolution de la couronne. Les buses de pulvérisation d'un premier ensemble 221, tel que celle visible sur la figure 6, sont inclinées de sorte que l'axe d'orientation A-A forme avec le plan de révolution de la couronne annulaire un premier angle α1, ici égal à 30°. Et les buses de pulvérisation d'un deuxième ensemble 222, tel que celle visible sur la figure 6, sont inclinées de sorte que l'axe d'orientation A-A forme avec le plan de révolution de la couronne annulaire un deuxième angle α2, ici égal à 45°.

On comprend, du fait de la caractéristique de l'invention selon laquelle deux buses voisines présentent des inclinaisons différentes, que les buses de chacun de ces deux ensembles sont alternées sur tout le pourtour de la couronne annulaire, de sorte qu'une buse d'un premier ensemble 221 de buses de pulvérisation donnée ne soit pas voisine d'une buse faisant partie du même ensemble, c'est-à-dire ne soit pas voisine d'une buse présentant la même inclinaison par rapport au plan de révolution de la couronne annulaire. On alterne sur le pourtour une buse de pulvérisation 22 d'un premier ensemble 221 de buses, une buse de pulvérisation 22 d'un deuxième ensemble 222 de buses, puis de nouveau une buse de pulvérisation 22 d'un premier ensemble 221 de buses, etc...

On a illustré sur les figures 5 et 6 un exemple conforme à l'invention pour la réalisation des inclinaisons différentes d'une buse de pulvérisation à l'autre.

Dans chacun des deux cas illustrés, le centre C du fourreau (tel qu'il est notamment visible sur la figure 7) ménagé dans le corps et le centre de chacun des tubes annulaires sont alignés. Et le corps est pivoté autour de ce point central défini par le centre C du fourreau pour venir porter contre le tube annulaire correspondant dans une zone de contact 52 plus ou moins éloignée de l'axe vertical, c'est-à-dire l'axe parallèle à l'axe de révolution de la couronne annulaire et passant par le centre de ce tube. Il en résulte que le centre C du fourreau de chaque corps est sensiblement à la même position par rapport aux tubes annulaires d'un cas à l'autre, sans décalage axial relativement à l'axe de révolution X-X. En d'autres termes, les corps des buses de pulvérisation ayant des inclinaisons différentes sont disposés à un même niveau axial relativement à l'axe de révolution du dispositif annulaire de projection.

Dans un premier plan de coupe radial illustré sur la figure 5 et correspondant au plan de coupe V-V de la figure 4, on a illustré une buse de pulvérisation d'un premier ensemble 221 de buses. Le premier orifice de sortie du premier tube et le deuxième orifice de sortie sont écartés de l'axe vertical propre à chaque tube annulaire et il en résulte une première inclinaison du corps de la buse pour que ses extrémités viennent en recouvrement des deux orifices de sortie. Cette première inclinaison est égale à l'inclinaison d'angle α1 de l'axe d'orientation A-A de la buse de pulvérisation d'un premier ensemble 221 par rapport au plan de révolution, c'est-à-dire ici égale à 30°.

Dans un deuxième plan de coupe radial illustré sur la figure 6 et correspondant au plan de coupe VI-VI de la figure 4, on a illustré une buse de pulvérisation d'un deuxième ensemble 222 de buses. Le premier orifice de sortie du premier tube et le deuxième orifice de sortie sont plus proches de l'axe vertical propre à chaque tube annulaire qu'ils ne le sont dans le premier plan de coupe, et il en résulte une deuxième inclinaison du corps de la buse pour que ses extrémités viennent en recouvrement des orifices de sortie. Cette deuxième inclinaison est égale à l'inclinaison d'angle α2 de l'axe d'orientation A-A de la buse de pulvérisation du deuxième ensemble 222 par rapport au plan de révolution, c'est-à-dire ici égale à 45°.

Il convient de noter qu'une buse de pulvérisation d'un premier ensemble et une buse de pulvérisation d'un deuxième ensemble, et notamment deux buses consécutivement agencées sur le pourtour du dispositif annulaire de projection, présentent une forme identique, tel que cela peut être illustré sur les figures, et que ces buses ne se distinguent l'une de l'autre que par l'inclinaison du corps reliant les deux conduits de distribution et donc par l'inclinaison de leur canal de sortie.

Tel que cela est illustré sur la figure 1, il résulte de cette différence d'orientation des buses du premier ensemble 221 et des buses du deuxième ensemble 222 une différence de hauteur de projection des jets de liant sur le tore de fibres 16. Le liant projeté par les buses du premier ensemble 221 impactent ainsi les fibres plus tôt que le liant projeté par les buses du deuxième ensemble 222. De la sorte, le premier spray 201 projeté par une buse du premier ensemble 221 s'étend sur un plan décalé axialement par rapport au plan dans lequel s'étend le deuxième spray 202 projeté par une buse du deuxième ensemble 222 et les gouttes formées dans un spray ne rencontrent pas, ou à tout le moins dans des limites acceptables, des gouttes formées dans un spray voisin de sorte à supprimer ou à limiter un problème de coalescence de gouttes que la rencontre des sprays pourrait générer. On a représenté à titre d'exemple sur la figure 4 une zone de recouvrement axial ZR, dans laquelle des gouttes formées à une extrémité orthoradiale 201' du premier spray 201 passent au-dessus des gouttes formées à une extrémité orthoradiale 202' du deuxième spray 202. Dans cette zone de recouvrement, le décalage axial le long de l'axe de révolution X-X assure que les gouttes ne se rencontrent pas et ne risquent pas de se déformer. On peut ainsi agencer au plus près deux buses de pulvérisation voisines, dans la mesure où elles font partie d'ensembles de buses distinct, et donc aux orientations distinctes, de manière à former ces zones de recouvrement sans risque de modification des gouttes et de manière à pouvoir assurer une fonction de redondance nécessaire pour un encollage de tout le pourtour du tore de fibres en cas de disfonctionnement d'une des buses de pulvérisation. On comprend facilement, notamment en s'appuyant sur l'illustration de la figure 4, que dans la mesure où une buse de pulvérisation d'un premier ensemble 221 arrêterait de fonctionner, de l'encollant pourrait continuer d'être projeté dans la zone ZR par une buse voisine d'un deuxième ensemble 222, à une hauteur différente de celle à laquelle ladite zone ZR aurait été encollée par la buse du premier ensemble 221. C'est cette différence de hauteur de projection générée par les différences d'inclinaison des buses voisines qui permet d'éviter que le format des gouttes délivrées par ces deux buses voisines soit modifié si elles sont toutes les deux en état de fonctionner.

Un agencement conforme à l'invention peut être mis en oeuvre dans le dispositif décrit et illustré précédemment, et peut également être mis en oeuvre, sans sortir du contexte de l'invention, dans d'autres modes de réalisation de dispositifs. À titre d'exemple, on pourra prévoir que le dispositif comporte des buses de pulvérisation agencées directement sur un tube annulaire à l'intérieur duquel circule le « liant vert », l'air étant apporté indépendamment pour chaque buse, sans qu'il soit nécessaire de prévoir un conduit de distribution d'air commun à chaque buse et donc des buses de pulvérisation agencées entre deux conduits tels qu'ils ont été décrits précédemment. Dès lors, un tel dispositif est conforme à l'invention en ce qu'il comporte un circuit de distribution du « liant vert » et une pluralité de buses de pulvérisation communiquant fluidiquement avec le circuit de distribution et réparties sur le pourtour du dispositif annulaire de projection pour projeter le « liant vert » sur les fibres de verre destinées à passer à l'intérieur du dispositif annulaire de projection défini par un axe de révolution, chaque buse de pulvérisation étant configurée pour la projection d'un liant vert sous forme de jet plat.

Selon un autre exemple, on pourra prévoir que les buses de pulvérisation soient des buses dites « air-less », c'est-à-dire des buses fonctionnant sans apport d'air comprimé pour réaliser la projection de liant. Dans ce cas, il peut être prévu une première variante dans laquelle on conserve la structure du dispositif annulaire de projection avec les deux tubes annulaires agencés l'un au-dessus de l'autre selon l'axe de révolution et les buses de pulvérisation disposées respectivement entre ces deux tubes annulaires, et dans laquelle le deuxième tube annulaire a uniquement une fonction structurelle, sans servir de circuit de distribution. Seul le liant à base de produits biosourcés circule dans le premier circuit de distribution formé par le premier tube annulaire, et aucun air n'est envoyé dans le deuxième tube annulaire. Il peut également être prévu une deuxième variante dans laquelle le dispositif annulaire de projection ne comporte qu'un tube annulaire sur lequel sont disposées les buses de pulvérisation, étant entendu que conformément à l'invention les buses de pulvérisation fixées sur ce tube annulaire unique comportent une tête de pulvérisation configurée pour la projection d'un jet plat.

Selon un autre exemple, on pourra prévoir que les buses sont réparties en plus de deux ensembles, chaque ensemble étant comme précédemment caractérisé par des buses présentant un angle d'inclinaison spécifique. On pourra prévoir un premier ensemble défini par des buses présentant une inclinaison α égale à 15°, un deuxième ensemble défini par des buses présentant une inclinaison α égale à 30°, et un troisième ensemble défini par des buses présentant une inclinaison α égale à 45°. Comme précédemment, on évite ainsi de disposer côte à côte des buses présentant la même inclinaison et dont le jet risque d'être perturbé par le jet voisin.

On va maintenant décrire plus en détail le liant à base de produits biosourcés, à travers différents exemples de réalisation non limitatifs, tel qu'il peut être injecté dans le dispositif annulaire de projection selon un aspect de l'invention en vue de sa pulvérisation sur un tore de fibres dans une installation de fabrication de laine minérale, étant rappelé que cette utilisation de liant à base de produits biosourcés est notamment rendue possible par la mise en oeuvre de buses de pulvérisation à jet plat permettant la répartition appropriée de ce liant sur la surface des fibres.

A titre d'exemple non limitatif, le liant à base de produits biosourcés peut contenir :
(a) au moins un glucide choisi parmi les sucres réducteurs, les sucres non réducteurs, les sucres hydrogénés et un mélange de ceux-ci, et
(b) au moins un agent de réticulation du ou des glucides.
On entend ici par « agent de réticulation de glucides » un composé capable de réagir, éventuellement en présence d'un catalyseur, avec les glucides et de former avec ces derniers un réseau tridimensionnel au moins partiellement insoluble.

Par ailleurs, le terme « glucides » a ici un sens plus large qu'usuellement, car il englobe non seulement les glucides au sens stricte, c'est-à-dire les sucres réducteurs ou hydrates de carbone de formule C*ₙ*(H₂O)*ₚ* présentant au moins un groupe aldéhyde ou cétone (groupe réducteur), mais également les produits d'hydrogénation de ces hydrates de carbone où le groupe aldéhyde ou cétone a été réduit en alcool. Ce terme englobe également les sucres non-réducteurs constitués de plusieurs motifs glucidiques dont les carbones porteurs de l'hydroxyle hémi-acétalique sont impliqués dans les liaisons osidiques reliant les motifs entre eux.

Un liant à base de produits biosourcés tel qu'il vient d'être présenté, à savoir une composition d'encollage à base de glucides et d'agent de réticulation, de préférence de polyacides carboxyliques, est décrit par exemple dans US 8197587, WO2010/029266, WO2013/014399, WO2015/181458, WO2012/168619, WO2012/168621, WO2012/072938.

Le composant glucidique peut être à base de sucres réducteurs, non réducteurs, de sucres hydrogénés exempt de sucres réducteurs ou non réducteurs, ou de leurs mélanges.

Les sucres réducteurs englobent les oses (monosaccharides) et osides (disaccharides, oligosaccharides et polysaccharides). A titre d'exemples de monosaccharides, on peut citer ceux comportant de 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que le glucose, le mannose et le galactose. Le lactose ou le maltose sont des exemples de disaccharides utilisables en tant que sucre réducteur. Les polysaccharides utilisables pour la présente invention ont de préférence une masse molaire moyenne en poids inférieure à 100.000, de préférence inférieure à 50.000, avantageusement inférieure à 10.000. De préférence, le polysaccharide renferme au moins un motif choisi parmi les aldoses précités, avantageusement le glucose. Sont particulièrement préférés les polysaccharides réducteurs qui sont constitués majoritairement (à plus de 50 % en poids) de motifs de glucose.

Le sucre réducteur peut notamment être un mélange de monosaccharides, d'oligosaccharides et de polysaccharides, notamment une dextrine. Les dextrines sont des composés répondant à la formule générale (C₆H₁₀O₅)ₙ. Elles sont obtenues par hydrolyse partielle d'amidon. Leur équivalent dextrose (DE) est avantageusement compris entre 5 et 99, de préférence entre 10 et 80.

Le sucre non réducteur est de préférence un oligoholoside non réducteur renfermant au plus dix motifs glucidiques. A titre d'exemples de tels sucres non réducteurs, on peut citer les diholosides tels que le tréhalose, les isotréhaloses, le saccharose et les isosaccharoses (« isosucroses » en anglais), les triholosides tels que le mélézitose, le gentianose, le raffinose, l'erlose et l'umbelliférose, les tétraholosides tels que le stachyose, et les pentaholosides tels que le verbascose. On préfère le saccharose et le tréhalose, et mieux encore le saccharose.

Par « sucre hydrogéné » on entend dans la présente invention l'ensemble des produits résultant de la réduction d'un saccharide choisi parmi les monosaccharides, disaccharides, oligosaccharides et polysaccharides et des mélanges de ces produits. Le sucre hydrogéné est de préférence un produit d'hydrogénation d'un hydrolysat d'amidon (degré d'hydrolyse est généralement caractérisé par l'équivalent dextrose (DE), compris entre 5 et 99, et avantageusement entre 10 et 80). L'hydrogénation transforme le sucre ou le mélange de sucres (hydrolysat d'amidon) en polyols ou alcools de sucre.

A titre d'exemples de sucres hydrogénés, on peut citer l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon. De préférence, le sucre hydrogéné ou le mélange de sucres hydrogénés est constitué majoritairement, c'est-à-dire à plus de 50 % en poids, de maltitol (produit d'hydrogénation du maltose, dimère de glucose résultant de l'hydrolyse enzymatique de l'amidon).

Le composant (a), à savoir le glucide constitué de sucres hydrogénés et/ou de sucres réducteurs et/ou non-réducteurs, représente avantageusement de 30 à 70 % en poids, de préférence de 40 à 60 % en poids de matières sèches de la composition d'encollage. Ces valeurs s'entendent avant l'ajout d'additifs éventuels.

L'agent de réticulation, c'est-à-dire le composant (b), utilisé dans la présente invention est choisi de préférence parmi les acides polycarboxyliques, les sels et anhydrides d'acides polycarboxyliques, les amines, les sels métalliques d'acides minéraux, et les sels d'amines et d'ammonium d'acides minéraux, ainsi que les mélanges des composés précités.

Les acides minéraux sont par exemple l'acide sulfurique, l'acide phosphorique, l'acide nitrique et l'acide chlorhydrique. Les sels métalliques peuvent être les sels de métaux alcalins, alcalino-terreux et de transition.

Les acides minéraux et leur sels utilisables en tant qu'agent de réticulation dans la présente invention sont décrits par exemple dans les demandes WO2012/168619, WO2012/168621 et WO2012/072938.

Dans un mode de réalisation préféré, l'agent de réticulation comprend un acide polycarboxylique ou est un acide polycarboxylique. L'acide polycarboxylique peut être un acide polymère (c'est-à-dire obtenu par polymérisation de monomères carboxylés) ou un acide monomère.

Pour limiter la viscosité de la composition d'encollage, cet acide polycarboxylique présente avantageusement une masse molaire moyenne en nombre inférieure ou égale à 50000, de préférence inférieure ou égale à 10000 et avantageusement inférieure ou égale à 5000.

On peut citer à titre d'exemples d'acides polycarboxyliques polymères, les homopolymères et copolymères obtenus à partir de monomères portant au moins un groupe acide carboxylique tel que l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide a,b-méthylèneglutarique et les monoesters d'acide dicarboxylique insaturés, tels que les maléates et les fumarates d'alkyle en C₁-C₁₀. Les copolymères peuvent contenir en outre un ou plusieurs monomères vinyliques ou acryliques tels que l'acétate de vinyle, le styrène substitué ou non par des groupements alkyle, hydroxyle ou sulfonyle, ou par un atome d'halogène, le (méth)acrylonitrile, le (méth)acrylamide, les (méth)acrylates alkyle en C₁-C₁₀, notamment le (méth)acrylate de méthyle, le (méth)acrylate d'éthyle, le (méth)acrylate de n-butyle et le (méth)acrylate d'isobutyle.

Dans un mode de réalisation particulièrement préféré, le composant (b) est ou comprend un acide polycarboxylique monomère. On entend par acide polycarboxylique monomère un acide polycarboxylique qui ne résulte pas de la polymérisation de monomères carboxylés. Un polyacide carboxylique monomère ne comporte donc pas un enchaînement de motifs récurrents.

Il peut s'agir d'un acide dicarboxylique, tricarboxylique ou tetracarboxylique.

Les acides dicarboxyliques englobent, par exemple, l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique.

Les acides tricarboxyliques englobent, par exemple, l'acide citrique, l'acide tricarballylique, l'acide 1,2,4-butanetricarboxylique, l'acide aconitique, l'acide hémimellitique, l'acide triméllitique et l'acide trimésique. On peut citer comme acide tétracarboxylique, par exemple l'acide 1,2,3,4-butanetétracarboxylique et l'acide pyroméllitique.

On utilisera de préférence l'acide citrique.

Le composant (b) représente avantageusement de 30 à 70 % en poids, de préférence de 40 à 60 % en poids de matières sèches de la composition d'encollage de la présente invention. Ces valeurs s'entendent avant l'ajout d'additifs éventuels.

Le rapport en poids du composant (a) au composant (b) est de préférence compris entre 70/30 et 30/70, en particulier entre 60/40 et 40/60.

La composition d'encollage peut comprendre en outre un catalyseur qui peut être choisi par exemple parmi les bases et les acides de Lewis, tels que les argiles, la silice colloïdale ou non colloïdale, les oxydes métalliques, les sulfates d'urée, les chlorures d'urée et les catalyseurs à base de silicates. Un catalyseur d'estérification est préféré.

Le catalyseur peut également être un composé contenant du phosphore, par exemple un hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium, le phosphite de sodium ou un mélange de ces composés.

La quantité de catalyseur introduite dans la composition d'encollage représente généralement au plus 20 % en poids, avantageusement de 1 à 10 % en poids, rapporté au poids total des composants (a) et (b).

De manière générale, les modes de réalisation qui sont décrits ci-dessus ne sont nullement limitatifs : on pourra notamment imaginer des variantes de l'invention ne comprenant qu'une sélection de caractéristiques décrites par la suite isolées des autres caractéristiques mentionnées dans ce document, tant que les variantes résultant de cette sélection sont couvertes par le texte des revendications.

## Revendications

1. Dispositif annulaire de projection (20) d'une composition d'encollage sur des fibres minérales (3), comportant au moins un circuit de distribution (24, 26) de ladite composition d'encollage et au moins une buse de pulvérisation (22) communiquant fluidiquement avec le circuit de distribution et agencée sur le pourtour du dispositif annulaire de projection pour projeter la composition d'encollage sur les fibres destinées à passer à l'intérieur du dispositif annulaire de projection défini par un axe de révolution (X-X), **caractérisé en ce que** la composition d'encollage est un liant à base de produits biosourcés et **en ce qu'**au moins une buse de pulvérisation comporte une tête de pulvérisation (36) présentant une fente (50), par laquelle le liant à base de produits biosourcés sort du dispositif annulaire de projection, à section rectangulaire de manière à former un jet plat de liant à base de produits biosourcés.

2. Dispositif annulaire de projection d'une composition d'encollage selon la revendication précédente, **caractérisé en ce que** l'au moins une buse de pulvérisation (22, 221, 222) est orientée vers l'intérieur du dispositif annulaire de projection avec un angle d'inclinaison (**α**) déterminé par rapport à un plan de révolution (P) du dispositif annulaire de projection, ledit angle d'inclinaison (**α**) étant compris entre 0 et 80°.

3. Dispositif annulaire de projection d'une composition d'encollage selon la revendication précédente, **caractérisé en ce que**, chaque buse de pulvérisation (22) étant orientée vers l'intérieur du dispositif annulaire de projection avec un angle d'inclinaison (**α**) déterminé par rapport à un plan de révolution (P) du dispositif annulaire de projection, au moins deux buses de pulvérisation (22, 221, 222) consécutivement agencées sur le pourtour du dispositif annulaire de projection sont disposées de manière à présenter une orientation par rapport au plan de révolution (P) du dispositif annulaire de projection d'un angle d'inclinaison (**α**) différent l'une de l'autre.

4. Dispositif annulaire de projection d'une composition d'encollage selon les revendications 2 ou 3, **caractérisé en ce que** chaque buse de pulvérisation (22, 221, 222) est voisine de buses dont l'orientation par rapport au plan de révolution (P) du dispositif angulaire de projection (20) est différente de la sienne.

5. Dispositif annulaire de projection d'une composition d'encollage selon l'une des revendications précédentes, **caractérisé en ce qu'**il comporte une pluralité de buses de pulvérisation (22, 221, 222) réparties sur le pourtour du dispositif annulaire de projection (20), chacune des buses de pulvérisation comportant une tête de pulvérisation (36) avec une fente (50) à section rectangulaire.

6. Dispositif annulaire de projection d'une composition d'encollage selon la revendication précédente, **caractérisé en ce que** la fente (50) à section rectangulaire de l'au moins une buse de pulvérisation (22) est agencée de sorte que le grand côté du rectangle formant cette fente s'étend parallèlement à un plan de révolution (P) du dispositif annulaire de projection.

7. Dispositif annulaire de projection d'une composition d'encollage selon l'une des revendications 5 ou 6, **caractérisé en ce que** la fente (50) à section rectangulaire de l'au moins une buse de pulvérisation (22) est dimensionnée de sorte que le jet plat de liant à base de produits biosourcés correspondant présente une première ouverture angulaire (β₁) comprise entre 40° et 120°, selon une première direction correspondant au grand côté de ladite fente (50).

8. Dispositif annulaire de projection d'une composition d'encollage selon l'une des revendications 5 à 7, **caractérisé en ce que** la fente (50) à section rectangulaire de l'au moins une buse de pulvérisation (22) est dimensionnée de sorte que le jet plat de liant à base de produits biosourcés correspondant présente une deuxième ouverture angulaire (β₂) comprise entre 5° et 40°, selon une deuxième direction correspondant au petit côté de ladite fente (50).

9. Dispositif annulaire de projection d'une composition d'encollage selon les revendications 7 et 8, **caractérisé en ce que** la fente (50) à section rectangulaire de l'au moins une buse de pulvérisation (22) est dimensionnée de sorte que la première ouverture angulaire (β₁) est au moins égale au double de la deuxième ouverture angulaire (β₂).

10. Dispositif annulaire de projection d'une composition d'encollage selon l'une des revendications précédentes, **caractérisé en ce que** le circuit de distribution (24, 26) du liant à base de produits biosourcés comporte une alimentation unique (27, 31) et une pluralité d'orifices (29, 30) communiquant respectivement avec une buse de pulvérisation (22).

11. Dispositif annulaire de projection d'une composition d'encollage selon l'une des revendications précédentes, **caractérisé en ce qu'**il comporte deux circuits de distribution (24, 26) distincts décalés le long de l'axe de révolution (X-X) du dispositif annulaire de projection (20), les buses de pulvérisation (22) étant agencées entre ces deux circuits de distribution de manière à être en communication fluidique avec chacun desdits circuits de distribution.

12. Dispositif annulaire de projection d'une composition d'encollage selon la revendication précédente, **caractérisé en ce qu'**un premier circuit de distribution (24) est configuré pour recevoir le liant à base de produits biosourcés et un deuxième circuit de distribution (26) est configuré pour recevoir de l'air comprimé.

13. Dispositif annulaire de projection d'une composition d'encollage selon la revendication précédente, **caractérisé en ce que** le premier circuit de distribution (24) présente une section moyenne de diamètre inférieur au diamètre de la section moyenne du deuxième circuit de distribution (26).

14. Installation de fabrication de laine minérale (100), comportant des moyens de fibrage configurés pour amener des fibres de verre à l'intérieur d'un poste d'encollage (2) de ces fibres, **caractérisée en ce que** le poste d'encollage comporte uniquement un dispositif d'encollage formé par un dispositif annulaire de projection (20) de composition d'encollage conforme à l'une des revendications précédentes, le dispositif annulaire étant agencé de manière à présenter un plan de révolution (P) sensiblement perpendiculaire à la direction de passage du tore de fibres à encoller.

15. Installation de fabrication de laine minérale selon la revendication précédente, dans lequel le dispositif annulaire de projection (20) est conforme à la revendication 12, **caractérisé en ce que** le dispositif annulaire de projection est agencé de sorte que le premier circuit de distribution (24), associé à la pulvérisation de liant à base de produits biosourcés, soit disposé en aval du trajet des fibres par rapport au deuxième circuit de distribution (26), associé à l'air comprimé.

16. Méthode de fabrication de laine minérale au cours de laquelle on réalise au moins les étapes suivantes :
- on amène du verre fondu dans un poste de fibrage,
- on crée des fibres de verre dans ce poste de fibrage, de manière à ce que ces fibres de verre prennent la forme d'un faisceau de fibres dirigé vers un poste d'encollage,
- on lie dans le poste d'encollage les fibres du faisceau entre elles par ajout d'un liant biosourcé, les fibres du faisceau étant liées directement à leur entrée dans le poste d'encollage sans qu'une couronne de refroidissement soit agencée dans le poste d'encollage, par un dispositif annulaire de projection comportant au moins un circuit de distribution (24, 26) dudit liant et au moins une buse de pulvérisation (22) communiquant fluidiquement avec le circuit de distribution, ladite au moins une buse de pulvérisation étant agencée sur le pourtour du dispositif annulaire de projection pour projeter ledit liant sur les fibres destinées à passer à l'intérieur du dispositif annulaire de projection défini par un axe de révolution (X-X), l'au moins une buse de pulvérisation comportant une tête de pulvérisation (36) présentant une fente (50), par laquelle le liant à base de produits biosourcés sort du dispositif annulaire de projection, à section rectangulaire de manière à former un jet plat de liant à base de produits biosourcés,
- et on transforme par chauffage le matelas de fibres encollées entre elles obtenu précédemment pour former la laine minérale.

17. Méthode de fabrication de laine minérale selon la revendication précédente, au cours duquel les fibres de verres sont liées entre elles sans qu'il soit nécessaire d'agencer un étage spécifique de refroidissement en amont et/ou en aval du poste d'encollage.

## Patentansprüche

1. Ringförmige Sprühvorrichtung (20) zum Aufsprühen einer Schlichtezusammensetzung auf Mineralfasern (3), umfassend mindestens einen Verteilerkreis (24, 26) für die Schlichtezusammensetzung und mindestens eine Sprühdüse (22), die fluidisch mit dem Verteilerkreis in Verbindung steht und am Umfang der ringförmigen Sprühvorrichtung angeordnet ist, um die Schlichtezusammensetzung auf die Fasern aufzusprühen, die im Inneren der ringförmigen Sprühvorrichtung durchtreten sollen, die durch eine Rotationsachse (X-X) definiert ist, **dadurch gekennzeichnet, dass** die Schlichtezusammensetzung ein Bindemittel auf Basis von biobasierten Produkten ist und dass mindestens eine Sprühdüse einen Sprühkopf (36) umfasst, der einen Schlitz (50) aufweist, durch den das Bindemittel auf Basis von biobasierten Produkten aus der ringförmigen Sprühvorrichtung austritt, mit rechteckigem Querschnitt, so dass ein flacher Strahl Bindemittel auf Basis von biobasierten Produkten gebildet wird.

2. Ringförmige Sprühvorrichtung zum Aufsprühen einer Schlichtezusammensetzung nach dem vorhergehenden Ansprüche, **dadurch gekennzeichnet, dass** die mindestens eine Sprühdüse (22, 221, 222) zum Inneren der ringförmigen Sprühvorrichtung hin mit einem bestimmten Neigungswinkel (α) in Bezug auf eine Rotationsebene (P) der ringförmigen Sprühvorrichtung ausgerichtet ist, wobei der Neigungswinkel (α) zwischen 0 und 80° beträgt.

3. Ringförmige Sprühvorrichtung zum Aufsprühen einer Schlichtezusammensetzung nach dem vorhergehenden Anspruch, **dadurch gekennzeichnet, dass**, wenn jede Sprühdüse (22) zum Inneren der ringförmigen Sprühvorrichtung hin mit einem bestimmten Neigungswinkel (α) in Bezug auf eine Rotationsebene (P) der ringförmigen Sprühvorrichtung ausgerichtet ist, mindestens zwei am Umfang der ringförmigen Sprühvorrichtung aufeinanderfolgend angeordnete Sprühdüsen (22, 221, 222) so angeordnet sind, dass sie eine Ausrichtung in Bezug auf die Rotationsebene (P) der ringförmigen Sprühvorrichtung mit einem voneinander verschiedenen Neigungswinkel (α) aufweisen.

4. Ringförmige Sprühvorrichtung zum Aufsprühen einer Schlichtezusammensetzung nach den Ansprüchen 2 oder 3, **dadurch gekennzeichnet, dass** jede Sprühdüse (22, 221, 222) in der Nähe von Düsen liegt, deren Ausrichtung in Bezug auf die Rotationsebene (P) der ringförmigen Sprühvorrichtung (20) von ihrer eigenen verschieden ist.

5. Ringförmige Sprühvorrichtung zum Aufsprühen einer Schlichtezusammensetzung nach einem der vorhergehenden Ansprüche, **dadurch gekennzeichnet, dass** sie eine Mehrzahl von Sprühdüsen (22, 221, 222) umfasst, die über den Umfang der ringförmigen Sprühvorrichtung (20) verteilt sind, wobei jede der Sprühdüsen einen Sprühkopf (36) mit einem Schlitz (50) mit rechteckigem Querschnitt umfasst.

6. Ringförmige Sprühvorrichtung zum Aufsprühen einer Schlichtezusammensetzung nach dem vorhergehenden Anspruch, **dadurch gekennzeichnet, dass** der Schlitz (50) mit rechteckigem Querschnitt der mindestens einen Sprühdüse (22) so angeordnet ist, dass sich die lange Seite des diesen Schlitz bildenden Rechtecks parallel zu einer Rotationsebene (P) der ringförmigen Sprühvorrichtung erstreckt.

7. Ringförmige Sprühvorrichtung zum Aufsprühen einer Schlichtezusammensetzung nach einem der Ansprüche 5 oder 6, **dadurch gekennzeichnet, dass** der Schlitz (50) mit rechteckigem Querschnitt der mindestens einen Sprühdüse (22) so dimensioniert ist, dass der entsprechende flache Strahl Bindemittel auf Basis von biobasierten Produkten eine erste Winkelöffnung (β1) zwischen 40° und 120° gemäß einer ersten Richtung aufweist, die der langen Seite des Schlitzes (50) entspricht.

8. Ringförmige Sprühvorrichtung zum Aufsprühen einer Schlichtezusammensetzung nach einem der Ansprüche 5 bis 7, **dadurch gekennzeichnet, dass** der Schlitz (50) mit rechteckigem Querschnitt der mindestens einen Sprühdüse (22) so dimensioniert ist, dass der entsprechende flache Strahl Bindemittel auf Basis von biobasierten Produkten eine zweite Winkelöffnung (β2) zwischen 5° und 40° gemäß einer zweiten Richtung aufweist, die der kurzen Seite des Schlitzes (50) entspricht.

9. Ringförmige Sprühvorrichtung zum Aufsprühen einer Schlichtezusammensetzung nach den Ansprüchen 7 und 8, **dadurch gekennzeichnet, dass** der Schlitz (50) mit rechteckigem Querschnitt der mindestens einen Sprühdüse (22) so dimensioniert ist, dass die erste Winkelöffnung (β1) mindestens gleich dem Zweifachen der zweiten Winkelöffnung (β2) ist.

10. Ringförmige Sprühvorrichtung zum Aufsprühen einer Schlichtezusammensetzung nach einem der vorhergehenden Ansprüche, **dadurch gekennzeichnet, dass** der Verteilerkreis (24, 26) für das Bindemittel auf Basis von biobasierten Produkten eine einzige Zuführung (27, 31) und eine Mehrzahl von Öffnungen (29, 30), die jeweils mit einer Sprühdüse (22) in Verbindung stehen, umfasst.

11. Ringförmige Sprühvorrichtung zum Aufsprühen einer Schlichtezusammensetzung nach einem der vorhergehenden Ansprüche, **dadurch gekennzeichnet, dass** sie zwei getrennte Verteilerkreise (24, 26) umfasst, die entlang der Rotationsachse (X-X) der ringförmigen Sprühvorrichtung (20) versetzt sind, wobei die Sprühdüsen (22) zwischen diesen beiden Verteilerkreisen so angeordnet sind, dass sie mit jedem der Verteilerkreise in Fluidverbindung stehen.

12. Ringförmige Sprühvorrichtung zum Aufsprühen einer Schlichtezusammensetzung nach dem vorhergehenden Anspruch, **dadurch gekennzeichnet, dass** ein erster Verteilerkreis (24) dazu ausgestaltet ist, das Bindemittel auf Basis von biobasierten Produkten aufzunehmen, und ein zweiter Verteilerkreis (26) dazu ausgestaltet ist, Druckluft aufzunehmen.

13. Ringförmige Sprühvorrichtung zum Aufsprühen einer Schlichtezusammensetzung nach dem vorhergehenden Anspruch, **dadurch gekennzeichnet, dass** der erste Verteilerkreis (24) einen mittleren Querschnitt mit einem Durchmesser aufweist, der kleiner als der Durchmesser des mittleren Querschnitts des zweiten Verteilerkreises (26) ist.

14. Anlage zur Herstellung von Mineralwolle (100), umfassend Zerfaserungsmittel, die dazu ausgestaltet sind, Glasfasern in eine Beschlichtungsstation (2) zum Beschlichten dieser Fasern zu führen, **dadurch gekennzeichnet, dass** die Beschlichtungsstation nur eine Beschlichtungsvorrichtung umfasst, die durch eine ringförmige Sprühvorrichtung (20) zum Aufsprühen einer Schlichtezusammensetzung nach einem der vorhergehenden Ansprüche gebildet wird, wobei die ringförmige Vorrichtung so angeordnet ist, dass sie eine Rotationsebene (P) aufweist, die im Wesentlichen senkrecht zur Durchtrittsrichtung des Torus der zu beschlichtenden Fasern ist.

15. Anlage zur Herstellung von Mineralwolle nach dem vorhergehenden Anspruch, bei der die ringförmige Sprühvorrichtung (20) Anspruch 12 entspricht, **dadurch gekennzeichnet, dass** die ringförmige Sprühvorrichtung so angeordnet ist, dass der erste Verteilerkreis (24), der dem Aufsprühen von Bindemittel auf Basis von biobasierten Produkten zugeordnet ist, in Bezug auf den zweiten Verteilerkreis (26), der der Druckluft zugeordnet ist, stromab des Weges der Fasern angeordnet ist.

16. Verfahren zur Herstellung von Mineralwolle, in dessen Verlauf mindestens die folgenden Schritte ausgeführt werden:
- geschmolzenes Glas wird in eine Zerfaserungsstation geführt,
- in dieser Zerfaserungsstation werden Glasfasern erzeugt, so dass diese Glasfasern die Form eines Faserbündels annehmen, das zu einer Beschlichtungsstation geleitet wird,
- in der Beschlichtungsstation werden die Fasern des Bündels durch Zugabe eines biobasierten Bindemittels untereinander gebunden, wobei die Fasern des Bündels direkt bei ihrem Eintreten in die Beschlichtungsstation, ohne dass ein Kühlkranz in der Beschlichtungsstation angeordnet ist, durch eine ringförmige Sprühvorrichtung gebunden werden, die mindestens einen Verteilerkreis (24, 26) für das Bindemittel und mindestens eine Sprühdüse (22), die fluidisch mit dem Verteilerkreis in Verbindung steht, umfasst, wobei die mindestens eine Sprühdüse am Umfang der ringförmigen Sprühvorrichtung angeordnet ist, um das Bindemittel auf die Fasern aufzusprühen, die im Inneren der ringförmigen Sprühvorrichtung durchtreten sollen, die durch eine Rotationsachse (X-X) definiert ist, wobei die mindestens eine Sprühdüse einen Sprühkopf (36) umfasst, der einen Schlitz (50) aufweist, durch den das Bindemittel auf Basis von biobasierten Produkten aus der ringförmigen Sprühvorrichtung austritt, mit rechteckigem Querschnitt, so dass ein flacher Strahl Bindemittel auf Basis von biobasierten Produkten gebildet wird,
- die zuvor erhaltene Matte aus untereinander beschlichteten Fasern wird durch Erhitzen verarbeitet, um die Mineralwolle zu bilden.

17. Verfahren zur Herstellung von Mineralwolle nach dem vorhergehenden Anspruch, in dessen Verlauf die Glasfasern untereinander gebunden werden, ohne dass es erforderlich ist, eine spezielle Kühlstufe stromauf und/oder stromab der Beschlichtungsstation anzuordnen.

## Claims

1. Annular discharge device (20) for discharging a gluing composition onto mineral fibres (3), comprising at least one distribution circuit (24, 26) for distributing said gluing composition and at least one spray nozzle (22) fluidically connected with the distribution circuit and arranged on the perimeter of the annular discharge device for discharging the gluing composition onto the fibres intended to pass inside the annular discharge device defined by an axis of revolution (X-X), **characterized in that** the gluing composition is a binder based on biosourced products and **in that** at least one spray nozzle comprises a spray head (36) having a slit (50), through which the binder based on biosourced products leaves the annular discharge device, with rectangular section so as to form a flat jet of binder based on biosourced products.

2. Annular discharge device for discharging a gluing composition according to the preceding claim, **characterized in that** the at least one spray nozzle (22, 221, 222) is oriented towards the interior of the annular discharge device with an angle of inclination (α) determined in relation to a plane of revolution (P) of the annular discharge device, said angle of inclination (α) lying between 0 and 80°.

3. Annular discharge device for discharging a gluing composition according to the preceding claim, **characterized in that**, each spray nozzle (22) being oriented towards the interior of the annular discharge device with an angle of inclination (α) determined with respect to a plane of revolution (P) of the annular discharge device, at least two spray nozzles (22, 221, 222) consecutively arranged on the perimeter of the annular discharge device are disposed so as to have an orientation with respect to the plane of revolution (P) of the annular discharge device with an angle of inclination (α) different from one another.

4. Annular discharge device for discharging a gluing composition according to Claims 2 and 3, **characterized in that** each spray nozzle (22, 221, 222) is adjacent to nozzles whose orientation with respect to the plane of revolution (P) of the angular discharge device (20) is different from its own.

5. Annular discharge device for discharging a gluing composition according to one of the preceding claims, **characterized in that** it comprises a plurality of spray nozzles (22, 221, 222) distributed over the perimeter of the annular discharge device (20), each of the spray nozzles comprising a spray head (36) with a slit (50) with rectangular section.

6. Annular discharge device for discharging a gluing composition according to the preceding claim, **characterized in that** the slit (50) with rectangular section of the at least one spray nozzle (22) is arranged so that the large side of the rectangle forming this slit extends parallel to a plane of revolution (P) of the annular discharge device.

7. Annular discharge device for discharging a gluing composition according to one of Claims 5 and 6, **characterized in that** the slit (50) with rectangular section of the at least one spray nozzle (22) is dimensioned in such a way that the corresponding flat jet of binder based on biosourced products has a first angular aperture (**β**₁) of between 40° and 120°, in a first direction corresponding to the large side of said slit (50).

8. Annular discharge device for discharging a gluing composition according to one of Claims 5 to 7, **characterized in that** the slit (50) with rectangular section of the at least one spray nozzle (22) is dimensioned in such a way that the corresponding flat jet of binder based on biosourced products has a second angular aperture (**β**₂) of between 5° and 40°, in a second direction corresponding to the small side of said slit (50).

9. Annular discharge device for discharging a gluing composition according to Claims 7 and 8, **characterized in that** the slit (50) with rectangular section of the at least one spray nozzle (22) is dimensioned in such a way that the first angular aperture (**β**₁) is at least equal to twice the second angular aperture (**β**₂).

10. Annular discharge device for discharging a gluing composition according to one of the preceding claims, **characterized in that** the distribution circuit (24, 26) for distributing the binder based on biosourced products comprises a single feed (27, 31) and a plurality of orifices (29, 30) connected respectively with a spray nozzle (22).

11. Annular discharge device for discharging a gluing composition according to one of the preceding claims, **characterized in that** it comprises two distinct distribution circuits (24, 26) that are offset along the axis of revolution (X-X) of the annular discharge device (20), the spray nozzles (22) being arranged between these two distribution circuits so as to be fluidically connected with each of said distribution circuits.

12. Annular discharge device for discharging a gluing composition according to the preceding claim, **characterized in that** a first distribution circuit (24) is configured to receive the binder based on biosourced products and a second distribution circuit (26) is configured to receive compressed air.

13. Annular discharge device for discharging a gluing composition according to the preceding claim, **characterized in that** the first distribution circuit (24) has a mean section of a diameter less than the diameter of the mean section of the second distribution circuit (26).

14. Mineral wool manufacturing installation (100), comprising fiberization means configured to bring glass fibres into a gluing station (2) for these fibres, **characterized in that** the gluing station comprises only a gluing device formed by an annular discharge device (20) for discharging a gluing composition according to one of the preceding claims, the annular device being arranged so as to have a plane of revolution (P) substantially at right angles to the direction of passage of the torus of fibres to be glued.

15. Mineral wool manufacturing installation according to the preceding claim, wherein the annular discharge device (20) is according to Claim 12, **characterized in that** the annular discharge device is arranged so that the first distribution circuit (24), associated with the spraying of binder based on biosourced products, is disposed downstream of the path of the fibres with respect to the second distribution circuit (26), associated with the compressed air.

16. Mineral wool manufacturing method during which at least the following steps are carried out:
- molten glass is brought into a fiberization station,
- glass fibres are created in this fiberization station, in such a way that these glass fibres take the form of a bundle of fibres directed towards the gluing station,
- in the gluing station, the fibres of the bundle are bound together by the addition of a gluing composition, the fibres of the bundle being bound directly upon their entry into the gluing station without a cooling ring being arranged in the gluing station, by an annular discharge device (20) comprising at least one distribution circuit (24, 26) for distributing said gluing composition and at least one spray nozzle (22) fluidically connected with the distribution circuit, said spray nozzle being arranged on the perimeter of the annular discharge device for discharging the gluing composition onto the fibres intended to pass inside the annular discharge device defined by an axis of revolution (X X), said at least one spray nozzle comprising a spray head (36) having a slit (50), through which the binder based on biosourced products leaves the annular discharge device, with rectangular section so as to form a flat jet of binder based on biosourced products.
- and the batt of fibres glued together obtained previously is transformed by heating to form the mineral wool.

17. Mineral wool manufacturing method according to the precedent claim, during which the glass fibres are bound together without the need to set up a specific cooling stage upstream and/or downstream of the gluing station.
